# DEMANDE DE BREVET EUROPEEN

(11) **EP 1 529 425 A1**
(43) Date de publication de la demande: **11.05.2005**
(21) Numéro de dépôt: 03025593.9
(22) Date de dépôt: 07.11.2003
(51) Int. Cl.: A01B 13/08, A01B 63/10

(54) **Dispositif porteur d'un soc d'ameublissement du sol dans le domaine des activites agricoles et plus particulierement de la viticulture**

(71) Demandeur: NAUD, 49600 Andrèze (FR)
(72) Inventeur: Martin, Daniel, 49600 Andreze (FR)
(74) Mandataire: Arbousse-Bastide, Jean-Claude Philippe

(57) **Abrégé**

L'invention a pour objet un dispositif d'ameublissement du sol (14), applicable à la viticulture notamment.

Ce dispositif comprend un soc composé d'une jambe (8,9) porteuse d'une dent (10), qui est supporté par une ossature (3,4,5,8) organisée en parallélogramme déformable et équipée de moyens de fixation (3) à un véhicule tracteur. Ce parallélogramme comprend une platine (3) solidaire du châssis du véhicule tracteur, auquel elle est reliée de manière à permettre un réglage latéral de la position du soc, cette platine supportant de manière articulée un couple de bras (4,5) en des premiers points d'ancrage distants respectifs (6,7). Les bras (4,5) sont par ailleurs articulés à la jambe (8,9) du soc (1) en des deuxièmes points d'ancrage respectifs (11,12), qui sont distants d'un même écart E2 que celui E1 séparant l'un de l'autre les premiers point d'ancrage (6,7). Un vérin hydraulique (13) est articulé sur la platine (3) au premier point d'ancrage supérieur (6), et sur la jambe (8,9) au deuxième point d'ancrage inférieur (12), diamétralement opposé au précédent (6).

## Description

Dispositif porteur d'un soc d'ameublissement du sol dans le domaine des activités agricoles et plus particulièrement de la viticulture, adaptable à tout type de véhicule tracteur et notamment aux tracteurs enjambeurs du type couramment utilisé en viticulture.

Dans le domaine de la viticulture, se pose le problème général de l'ameublissement du sol compte tenu de la configuration particulière des vignes. Il est souhaitable que cet ameublissement soit effectué en profondeur entre les rangs de vignes, sans pour autant bouleverser le sol environnant les pieds de vigne installés sur site.

On connaît des machines agricoles aménagées pour fouiller le sol en profondeur, au moyen d'un soc généralement équipé de moyens de réglage de sa profondeur de pénétration du sol, mettant en oeuvre des bras porteurs du soc et un vérin hydraulique, qui sont montés sur le véhicule tracteur en étant agencés entre eux en parallélogramme déformable. On pourra par exemple se reporter au document DE3413552 (HERBERT) qui décrit une telle machine.

Cependant, et au regard de la spécificité susvisée du travail de la vigne, de telles machines ne sont pas adaptées pour ce travail, en raison d'une part de leur conception propre qui est lourde et massive, et d'autre part en raison des particularités de leur aménagement global en relation avec un véhicule tracteur spécifique.

Le but de la présente invention est de proposer un dispositif pour ameublir le sol, spécifiquement agencé pour le travail de la vigne, à partir de son montage sur tout type de tracteur, et notamment un tracteur enjambeur.

Le dispositif d'ameublissement du sol selon la présente invention, est du type comprenant un soc composé d'une jambe porteuse d'une dent et supporté par une ossature organisée en parallélogramme déformable qui comporte des moyens de fixation à un véhicule tracteur, et se caractérise essentiellement en ce que les moyens de fixation du soc sur le véhicule tracteur comprennent une platine solidarisée au châssis du véhicule tracteur, la dite platine étant participante de l'ossature organisée en parallélogramme déformable et supportant de manière articulée en premier lieu un couple de bras et en deuxième lieu un vérin hydraulique, lesdits bras étant supportés par la platine par l'une de leurs extrémités en des premiers points d'ancrage distants respectifs, tandis que leurs autres extrémités respectives sont chacune articulées à la jambe du soc en des deuxièmes points d'ancrage respectifs distants. L'écart séparant les deuxièmes points d'ancrage sera le même que celui séparant les premiers points d'ancrage, pour conférer aux bras une même longueur efficace. Le vérin hydraulique sera articulé d'une part à l'une de ses extrémités à l'un quelconque des premiers points d'ancrage et à l'autre de ses extrémités au deuxième point d'ancrage diamétralement opposé au précédent.

On comprendra que cette platine est préférentiellement rendue solidaire du châssis du véhicule tracteur par boulonnage ou analogue, de manière à participer de ce châssis et permettre un réglage latéral de la position du soc.

Ces dispositions sont telles que le dispositif est apte à être monté sur tout type de véhicule tracteur par l'intermédiaire de la seule platine. Par ailleurs, la manoeuvre du vérin hydraulique provoque un déplacement en profondeur du soc dans le sol suivant un angle d'attaque du sol par la dent qui est constant, sans pour autant bouleverser le sol environnant les pieds de vigne. On notera aussi que grâce à ces dispositions, le dispositif est apte à être installé sur de quelconques points de fixation de l'organe tracteur, tant en partie basse entre ses roues, et notamment entre les jambes d'un tracteur enjambeur du genre de ceux employés pour le travail des vignes, qu'en zone arrière.

Selon une forme préférée de réalisation de l'invention, le vérin hydraulique est articulé par son fond à la platine, par l'intermédiaire du premier point d'ancrage en position supérieure par rapport à la dent, tandis qu'il est articulé par sa tête à la jambe du soc par l'intermédiaire du deuxième point d'ancrage, inférieur.

Ces dispositions sont telles que le déploiement du parallélogramme déformable est provoqué par une manoeuvre en sortie de tige du vérin hydraulique.

De préférence, le vérin hydraulique est un vérin double effet équipé de moyens amortisseurs préférentiellement placés à l'extérieur du vérin et de type oléopneumatique, pour préserver l'ossature des chocs transmis par le soc.

Le vérin comporte avantageusement des moyens de raccordement à la source d'énergie hydraulique associée aux moyens de commande du véhicule tracteur.

La jambe du soc est avantageusement composée de deux éléments assemblés l'un en prolongement de l'autre, l'un comportant les deuxièmes points d'ancrage et l'autre supportant la dent. Ces dispositions visent à faciliter l'interchangeabilité de la dent, sans avoir à retirer le dispositif du véhicule tracteur.

La présente invention sera mieux comprise, et des détails en relevant apparaîtront, à la description qui va en être faite d'une forme préférée de réalisation, en relation avec les figures de la planche annexée, dans laquelle :

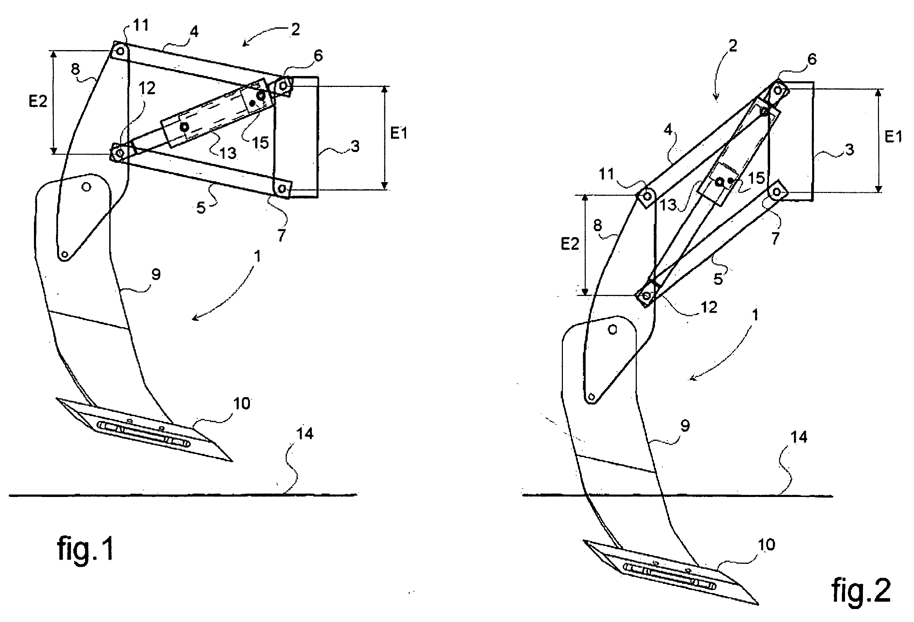

Les fig.1 et fig.2 sont des représentations de côté d'un dispositif de l'invention, respectivement en position rétractée et en position déployée de l'ossature porteuse du soc.

Sur les figures, un dispositif de manoeuvre d'un soc 1 destiné à être tracté par un véhicule enjambeur (non représenté sur les figures), comprend une ossature 2 organisée en parallélogramme déformable. Cette ossature 2 comprend une platine 3 de fixation du dispositif au châssis du véhicule tracteur, duquel châssis la platine 3 est solidaire par boulonnage de manière à permettre un réglage latéral de la position du soc. Cette platine 3 supporte de manière articulée deux bras 4 et 5 en des premiers points d'ancrage 6 et 7, distants d'un écart E1. Ces bras 4 et 5 sont par ailleurs articulés sur une jambe 8,9 participante du soc 1, porteuse d'une dent 10, en des deuxièmes points d'ancrage 11 et 12. L'écart E2 entre les deuxièmes points d'ancrage 11 et 12 des bras 4 et 5 sur la jambe 8,9 est équivalent à l'écart E1 séparant les premiers points d'ancrage 6 et 7 des bras 4 et 5 sur la platine 3.

Par ailleurs, un vérin hydraulique 13 est articulé à son fond sur la platine 3, au premier point d'ancrage supérieur 6 par rapport à la dent 10, et à sa tête sur la jambe 1 du soc, au deuxième point d'ancrage inférieur 12. Ce vérin est équipé de moyens amortisseurs oléopneumatiques 15, pour préserver l'ossature des chocs transmis par le soc 1.

On remarquera sur les figures que l'angle d'attaque du sol 14 par la dent 10 est constant, quelle que soit sa position relevée ou abaissée de travail.

La jambe du soc est composée de deux éléments 8,9 assemblés de manière facilement réversible, l'un 8 réservé à la liaison du soc sur l'ossature 3,4,5,8 tandis que l'autre 9 est porteur de la dent 10.

## Revendications

1. Dispositif d'ameublissement du sol (14), du type comprenant un soc (1) composé d'une jambe (8,9) porteuse d'une dent (10), ce soc étant supporté par une ossature (3,4,5,8), qui est organisée en parallélogramme déformable et qui comporte des moyens de fixation (3) à un véhicule tracteur, **caractérisé en ce que** les moyens de fixation du soc (1) sur le véhicule tracteur comprennent une platine (3) solidarisée au châssis du véhicule tracteur, la dite platine (3), participante de l'ossature organisée en parallélogramme déformable, supportant de manière articulée en premier lieu un couple de bras (4,5) par l'une de leurs extrémités en des premiers points d'ancrage distants respectifs (6,7), tandis que leur autre extrémité respective sont chacune articulées à la jambe (8,9) du soc (1) en des deuxièmes points d'ancrage respectifs distants (11,12) d'un même écart E2 que celui E1 séparant l'un de l'autre leur premier point d'ancrage (6,7) sur la platine (3), et en deuxième lieu un vérin hydraulique (13) articulé d'une part à l'un de ses bouts à l'un quelconque des premiers points d'ancrage (6,7) et à l'autre de ses bouts au deuxième point d'ancrage (11,12) diamétralement opposé au précédent (6,7).

2. Dispositif selon la revendication 1, **caractérisé en ce que** le vérin hydraulique (13) est articulé par son fond à la platine (3), par l'intermédiaire du premier point d'ancrage (6) en position supérieure par rapport à la dent (10), tandis qu'il est articulé par sa tête à la jambe (8,9) du soc (1) par l'intermédiaire du deuxième point d'ancrage (12), inférieur, en sorte que le déploiement du parallélogramme déformable est provoqué par une sortie de tige du vérin hydraulique (13).

3. Dispositif selon la revendication 2, **caractérisé en ce que** le vérin hydraulique (13) est un vérin double effet équipé de moyens amortisseurs oléopneumatiques (15), pour préserver l'ossature des chocs transmis par le soc (1).

4. Dispositif selon la revendication 3, **caractérisé en ce que** le vérin (13) comporte des moyens de raccordement à la source d'énergie hydraulique associée aux moyens de commande du véhicule tracteur.

5. Dispositif selon l'une quelconque des revendications précédentes, **caractérisé en ce que** la jambe (8,9) du soc (1) est composée de deux éléments assemblés l'un en prolongement de l'autre, l'un (8) comportant les deuxièmes points d'ancrage (11,12) et l'autre (9) supportant la dent (10).
